# EUROPEAN PATENT SPECIFICATION

(11) **EP 0 335 598 B1**
(45) Date of publication and mention of the grant of the patent: **11.08.1993**
(21) Application number: 89302918.1
(22) Date of filing: 23.03.1989
(51) Int. Cl.: B67D 1/00, B67D 1/10, G01F 11/06

(54) **Device for the dispensing of beer and other beverages**
Vorrichtung zur Abgabe von Bier und anderen Getränken
Dispositif pour la distribution de bière et d'autres boissons

(30) Priority: 26.03.1988 GB 8807263; 15.11.1988 GB 8826652
(43) Date of publication of application: 04.10.1989
(73) Proprietor: Bass Public Limited Company, Burton-on-Trent DE14 1JZ (GB)
(72) Inventor: Little, William, Stretton Burton-on-Trent, DE13 OHP (GB); Foster, Peter Thomas, Rolleston Road Burton-on-Trent, DE13 OXR (GB); Betteridge, Paul, Swadlincote Burton-on-Trent (GB)
(74) Representative: Lawrence, John

(56) References cited:
- WO-A-87/02699
- DE-B- 1 757 283
- FR-A- 1 246 205
- FR-A- 2 365 706
- US-A- 2 736 466

## Description

This invention relates to the dispensing of beer and other beverages. The term beer is used herein to denote any fermented hopped wort and therefore includes within its scope such beverages as ales lagers and stouts.

It is common for beer to be brewed on a large scale at a brewery and for the beer thus brewed to be transported to licensed premises where it is dispensed for people to drink it. As beer is relatively bulky and heavy, the cost of its transportation is relatively great and forms a significant part of the overall cost of the beer sold.

One aim of the present invention is to provide a system enabling that problem to be reduced.

It is preferred to arrange for the metering out of the strong beer and of the carbonated water to be carried out throughout substantially the same period of time so as to avoid or reduce the possibility of some of the metered portion of strong beer or some of the metered portion of carbonated water being dispensed on its own.

If strong beer and carbonated water were separately dispensed into a glass other than simultaneously, the liquids would generally mix quite quickly to provide a portion of beer of the required strength. Nevertheless, it would be readily apparent to anyone looking at the contents of the glass that it was a mixture of different constituents rather than a homogeneous measure of beer. For this reason it is particularly desirable to ensure that the portions of strong beer and carbonated water are fully mixed, or are at least substantially fully mixed, before they reach a glass or other vessel into which the mixture is dispensed.

Dispensing means known from the prior art includes the disclosure of FR-A-2 305 706. This relates to a metering means comprising first and second meters each comprising a piston moveable from one end to another inside an associated cylinder, wherein the volume ratio of the two liquids is variable by means of axial adjustment of one of the pistons, the total volume of liquid metered out by the two pistons remaining unaltered.

Although the invention has been developed largely with a view to providing a system for dispensing beer, it is to be understood that the metering means may be used in making other beverages, for example a beverage comprising a mixture of a concentrate and plain water or a mixture of a concentrate and carbonated water.

According to the invention metering means for metering out a predetermined volume of a mixture of liquids comprises first and second meters each comprising a piston movable from one end position to another inside an associated cylinder, the cylinders of the first and second meters being constituted by portions of the associated cylinder, the arrangement being such that the total volume of liquid metered out by the two meters when each piston moves from one end position to the other remains unaltered, characterised in that the associated cylinder is axially adjustable so as to vary the volume of liquid metered out by each of the meters.

Embodiments of the present invention will now be described in more detail, by way of example, with reference to the accompanying drawings, in which:
Figure 1 is a somewhat schematic section through metering means embodying the present invention,
Figure 2 is a diagrammatic representation of apparatus embodying the invention and incorporating the metering means shown in Figure 1, and
Figure 3 is a section through a form of metering means of the kind shown in Figures 1 and 2.

The apparatus serves to meter out strong beer and carbonated water in predetermined relative volumes. It is therefore necessary for strong beer to be prepared, that is beer of a strength greater than that of the beer to be dispensed and presented for consumption.

The strong beer may be brewed in such a manner that it constitutes only about 60% of the volume of the beer finally presented. This strong beer is racked into kegs using conventional techniques and is transported to licensed premises for use. Alternatively the strong beer may have an alcohol content four or five times higher than that of the beer that is to be presented for consumption. Strong beer of that kind can be made by brewing a beer of normal strength and then concentrating it by any one of a number of techniques that serve to reduce the water-content of beer, such as the use of a centrifugal film evaporator.

Whatever form of strong beer is used, dispense is effected with the aid of apparatus including metering means enabling the strong beer to be diluted with carbonated water to the desired dilution. The apparatus may also include a device for carbonating water. Such devices are well-known, and a device of any suitable design may be employed. The water used may be tap water or other locally available water, and if necessary the water may be purified before it is carbonated. This may be done for example by passing it through a bed of active charcoal or by an ion-exchange process.

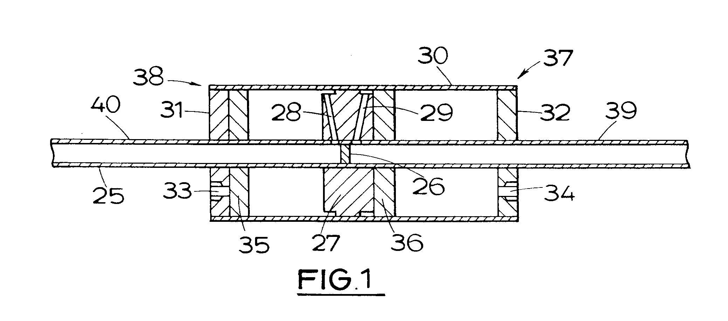

The strong beer and carbonated water are led through suitable ducts to metering means comprising volumetric meters of the displacement kind. One form of metering means is illustrated schematically in Figure 1.

The metering means comprises a tube 25 provided with a barrier 26 which prevents liquid in the pipe flowing from one side of the barrier to the other. A drum 27 is secured to the pipe and extends axially in both directions from the barrier 26. The drum is formed with radially extending ducts 28 and 29. The inner end of each duct is aligned with an associated hole in the pipe and so communicates with the interior of the pipe, while the outer end of each duct leads to the peripheral face of an end portion of the drum that is of reduced diameter. A glass cylinder 30, co-axial with the tube 25, surrounds the drum and is provided at its end with closure discs 31 and 32 which are fixed to the cylinder. The tube 25 extends through central holes in the discs. The arrangement is such that the position of the cylinder 30 with its discs 31 and 32 can be adjusted axially relative to the tube 25 and drum 27. Liquid seals (not shown) are provided between the drum and the cylinder and between the discs and the tube. The disc 31 has a port 33 and the disc 32 has a port 34. Inside the cylinder 30 there are pistons 35 and 36 which can move axially relative to the tube 25 and the cylinder 30 but are provided with sealing means (not shown) to prevent liquid passing from one side thereof to the other. The piston 35 is disposed between the disc 31 and the drum 27 while the piston 36 is disposed between the disc 32 and the drum.

The metering means is so designed that the volume that can be swept out by the two pistons 35 and 36 in moving from one end position to the other is equal to the volume of beer to be dispensed, for example half a pint. That volume remains unaltered on adjustment of the axial position of the cylinder 30. That part 37 of the metering means to one side of the drum is arranged to meter out strong beer, and that part 38 to the other side of the drum is arranged to meter out carbonated water.

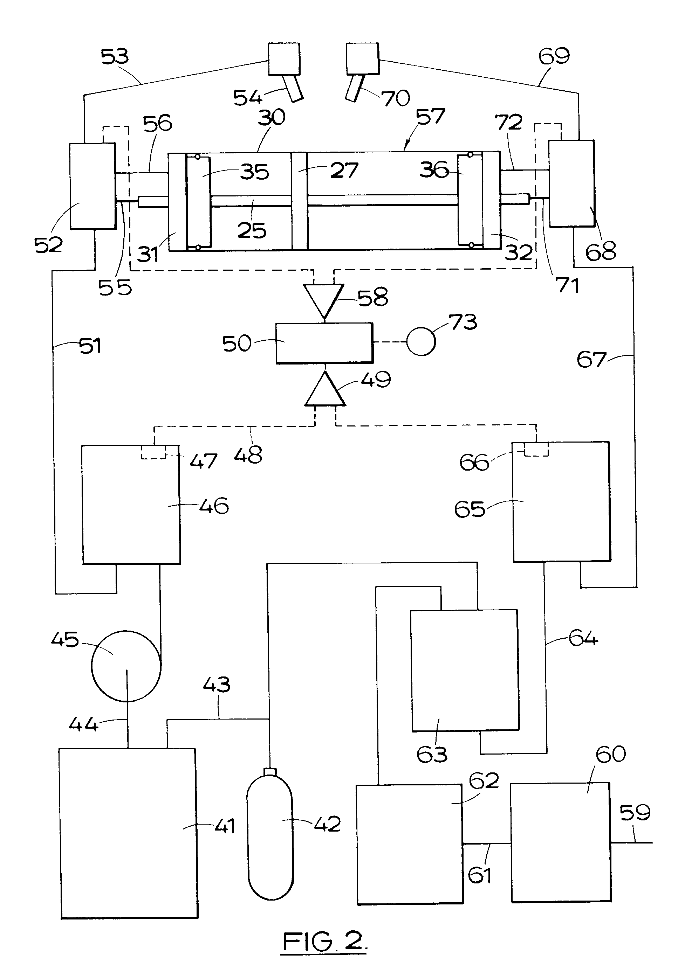

Apparatus incorporating metering means of the kind illustrated in Figure 1 is shown diagrammatically in Figure 2. The apparatus is intended for use in dispensing beer, the beer dispensed being a mixture of strong beer and carbonated water. On each operation of the apparatus, as described below, a standard volume of beer, typically half a pint is dispensed.

A keg 41 contains strong beer. For example, the strong beer may have an alcohol content four or five times higher than that required for consumption. The headspace of the keg is supplied with carbon dioxide from a cylinder 42 by way of a pipe 43. A pipe 44 leads from the keg 41 to the inlet of a centrifugal pump 45, the outlet of the pump leading to the inlet of a fob detector 46. The pump is arranged to operate when ever the apparatus is in a state such as to permit strong beer to be pumped through it. The fob detector incorporates a chamber of rather greater capacity than the volume of strong beer metered out during any one operation of the apparatus. Near the top of the chamber is a liquid level sensor 47 which, when the level of liquid in the chamber is sufficiently high, sends an electrical signal by way of a line 48 to an AND gate 49 connected to a control unit 50. Should the level of liquid in the chamber fall, the sensor 47 fails to detect the presence of liquid and ceases to send a signal to the AND gate 49.

The sensor 47 may conveniently comprise a reed switch inside a fixed, sealed housing, and a float which contains a permanent magnet and which is pivoted to the housing about a horizontal axis. The arrangement is such that if the level of liquid in the chamber falls below a predetermined level the float drops gravitationally to a lowered position such that its magnet cannot operate the reed switch, but that when the chamber is full of liquid the float moves to a raised position in which its magnet causes the reed switch to close.

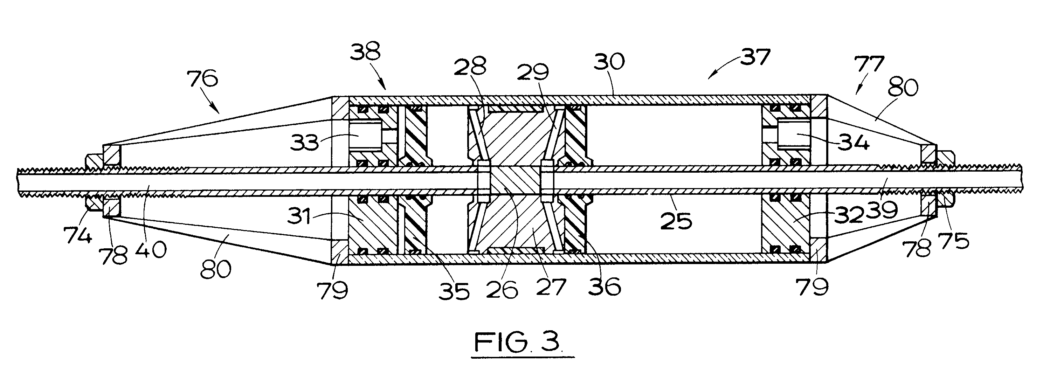

At the bottom of the chamber of the fob detector 46 is an outlet leading to a pipe 51 which in turn leads to the inlet of a valve unit 52. An outlet pipe 53 leads from the valve unit to a dispense nozzle 54 disposed in a dispense head (not shown). A pair of feed pipes 55 and 56 extend between the valve unit and a metering unit 57 similar to the measuring means illustrated in Figure 3. The valve unit is capable of assuming each of two different states. In one state it connects the pipe 51 to the feed pipe 55 and it connects the feed pipe 56 to the outlet pipe 53. In the other state it connects the pipe 51 to the feed pipe 56 and it connects the feed pipe 55 to the outlet pipe 53. Each successive change in state is initiated by an electrical signal from the control unit 50.

The metering unit 57 is similar in construction to that illustrated in Figure 1, and its component parts have the same reference numerals as those in Figure 1.

In order to permit adjustment of the concentration of the dispensed beer, the cylinder, with its closure discs 31 and 32 is adjustable axially relatively to the barrier 26, the disc 27 and the tube 25. To this end, end portions of the tube 25 are externally screw-threaded and are engaged by nuts (not shown) which abut the outer faces of the closure discs 31 and 32. When adjustment is to be effected one nut is screwed away from its adjacent closure disc and the other nut is screwed against its adjacent disc so at to push towards the first nut the cylinder assembly comprising the closure discs and the cylinder. Seals may be applied to the nuts so that any unauthorised tampering with the adjustment will be revealed. Alternatively the entire metering unit may be enclosed in a sealed enclosure. The total volume swept out by the pistons 35 and 36, when each moves from one end position of its travel to the other, remains constant, and is independent of the position of adjustment of the cylinder assembly.

The valve unit 52 incorporates a flow detector (not shown) which sends an electrical signal to an OR gate 58 whenever liquid is flowing from the valve unit to the outlet pipe 53. The flow detector may comprise a short vertically disposed tube containing a cylindrical weight. Each weight contains a permanent magnet and is of a density only a little greater than that of water. Each weight is of elongated shape and of rather smaller cross-section than that of the tube. When liquid is flowing through the tube it causes the associated weight to rise in the tube; the magnet in the weight then closes a reed switch adjacent to an upper part of the tube. When the flow of liquid ceases the weight drops again and the switch reopens.

Turning now to that side of the apparatus concerned with the production and supply of carbonated water, a water inlet pipe 59 is connected to any suitable supply of water such as a mains supply and leads to a carbon filter 60. A pipe 61 leads from the filter to a carbonator 63 by way of a displacement pump 62. The pump is operative to spray water into a chamber in the carbonator 63. Carbon dioxide, which may be derived from the cylinder 42 or from a different source, is also supplied to the chamber and becomes dissolved in the water. Liquid level sensors (not shown) are mounted near the top and bottom of the chamber and are connected in a control circuit for the pump 62 in such a manner that when the chamber is nearly empty the pump is switched on and then continues to operate until the chamber is nearly full. The capacity of the chamber may be about three quarters of a pint (0.426 l).

An outlet from the bottom of the carbonator 63 is connected by way of a pipe 64 to a fob detector 65 similar to the fob detector 46. A liquid level sensor 66, similar to the sensor 47, supplies a signal to the AND gate 49. An outlet from the bottom of the fob detector 65 leads by way of a pipe 67 to a valve unit 68 similar to the valve unit 52. An outlet pipe 69 leads from the valve unit 68 to a dispense nozzle 70 in the dispense head that also includes the nozzle 54. A pair of feed pipes 71 and 72 are connected between the valve unit 68 and the metering unit and operate in an equivalent manner to the feed pipes 55 and 56. The valve unit 68 incorporates a flow detector (not shown) which operates in a manner similar to that incorporated in the valve unit 52, sending an electrical signal to the OR gate 58 whenever liquid is flowing from the valve unit to the outlet pipe 69.

The dispense nozzles 54 and 70 may merely be mounted side-by-side on or in a dispense head so that in use liquids discharged from them are directed into a glass or other vessel placed beneath them and mix in that vessel. Preferably, however, the dispense head includes a mixing chamber (not shown) into which the strong beer and carbonated water are discharged and where they become at least partially mixed before being discharged through a single outlet into a glass or other vessel disposed beneath the outlet. The arrangement is preferably such that all of the liquid has been discharged gravitationally from the mixing chamber by the end of the dispense operation. The capacity of the mixing chamber may be less than that of the total volume of liquid dispensed during any one dispense operation.

The apparatus preferably includes cooling means (not shown). This may conveniently comprise a refrigerating means for cooling water, a tank for containing the cooled water and pump means for circulating the cooled water as described below. Pipes for conveying strong beer and carbonated water to the fob detectors 46 and 65 respectively preferably incorporate cooling coils immersed in the cooled water in the tank. The carbonator 62 is also preferably immersed in the cooled water. It may even be appropriate in some instances to immerse the fob detectors 46 and 65 and the valve units 52 and 68 in the cooled water. The fob units or the valve units or both the fob units and the valve units may be of compact form and may incorporate housings made of a plastics material such as polymethylmethacrylate disposed at the ends of the metering unit 57. Moreover, the whole of the metering unit could be immersed in the cooled water; in that case the cylinder 30 would preferably be made of stainless steel. Whatever arrangement is used, however, it is preferably such that the strong beer and the carbonated water reach the metering means at substantially the same temperature. This avoids thermal distortion of the metering means. The outlet pipes 53 and 69 are preferably disposed side-by-side in a thermally insulating sleeve which also contains pipework through which a constant flow of cooled water is maintained by the pump means. Furthermore, the mixing chamber, described above, may also be cooled by means of cold water circulating through a cooling jacket.

In use, when a portion of beer is to be dispensed the operator momentarily depresses a button which is conveniently situated adjacent to the dispense head. This closes a switch 73 which brings into operation the control unit 50. Provided that the signals from the liquid level sensors 47 and 66 indicate that the fob detectors are full of liquid, a signal from the AND gate 49 causes the control unit to reverse the states of each of the valve units 52 and 68. In consequence portions of strong beer and carbonated water are metered out by the metering unit 57. Adjustable restrictors (not shown) are provided in the pipes 51 and 67, and they are adjusted to settings such that the pistons 35 and 36 cease their travel at the same moment, having started their travel simultaneously at an earlier moment.

As long as at least one of the flow detectors incorporated in the valve units 52 and 68 detects the flow of liquid, the OR gate 58 passes a signal to the control unit 50 which inhibits it from reversing the state of the valve units.

If, for any reason, the supply of either liquid to the associated fob detector 46 or 65 should cease, the associated liquid level sensor 47 or 66 would cease to send a signal to the AND gate 49, and no signal would pass from that gate to the control unit 50. In consequence, subsequent closure of the switch 73 would have no effect. If dispense were in progress when a fall in liquid level was detected, that dispense would continue satisfactorily, as there would be an adequate supply of liquid remaining in the fob detector concerned.

Figure 3 shows a practical embodiment of the metering means shown diagrammatically in Figures 1 and 2. Here again the component parts are given the same reference numerals as those in Figures 1 and 2.

The position of the cylinder 30, with its closure discs 31 and 32, can be adjusted relative to the tube 25 and drum 27 by means of locating nuts 74 and 75 which engage externally screw-threaded portions of the tube 25. As it is desirable to ensure that the closure discs 31 and 32 never engage the screw-threaded portions of the tube 25, in any position of adjustment, bearers 76 and 77 are disposed between the nuts and the adjacent closure discs. Each bearer comprises a small ring 78 at one end against which the nut bears, and a large ring 79 at the other end which bears against both the adjacent closure disc and the adjacent end of the cylinder 30. Arms 80 extend between the rings 78 and 79.

As explained above the metering means illustrated in either of Figures 1 and 3 may be used for metering out other beverages.

## Claims

1. Metering means for metering out a predetermined volume of a mixture of liquids comprises first and second meters (37,38) each comprising a piston (35,36) movable from one end position to another inside an associated cylinder (30), the cylinders of the first and second meters being constituted by portions of the associated cylinder (30), the arrangement being such that the total volume of liquid metered out by the two meters when each piston moves from one end position to the other remains unaltered, characterised in that the associated cylinder (39) is axially adjustable so as to vary the volume of liquid metered out by each of the meters.

2. Beer dispensing apparatus characterised in that it includes metering means in accordance with claim 1.

3. Beer dispensing apparatus according to claim 2 characterised in that the metering means is operative to cause strong beer and carbonated water to be mixed together in a predetermined volume relationship so as to yield beer of a predetermined strength suitable for consumption.

4. Beer dispensing apparatus according to claim 3 characterised in that the strong beer and carbonated water are mixed only as they are being dispensed.

5. Beer dispensing apparatus according to any one of claims 2 to 4, characterised in that a metered volume of either strong beer or carbonated water is introduced into a metering vessel of predetermined volume greater than said metered volume and the other liquid is then introduced until the vessel is full.

## Patentansprüche

1. Abmeßmittel zum Abmessen eines vorbestimmten Volumens einer Mischung aus Flüssigkeiten mit ersten und zweiten Abmeßelementen (37,38), von denen jedes einen von einer Endposition zu einer anderen in einem verbundenen Zylinder (30) beweglichen Kolben (35,36) aufweist, wobei die Zylinder des ersten und des zweiten Abmeßelementes von Teilen des verbundenen Zylinders (30) gebildet sind, wobei die Anordnung derart ist, daß das ganze Volumen der Flüssigkeit, das durch die zwei Abmeßelemente abgemessen wird, wenn sich jeder Kolben von der einen Endposition zur anderen bewegt, unverändert bleibt,
dadurch gekennzeichnet,
daß der verbundene Zylinder (39) axial justierbar ist, so daß das Volumen der durch jedes Abmeßelement abgemessenen Flüssigkeit veränderbar ist.

2. Bierabgabevorrichtung,
dadurch gekennzeichnet,
daß sie Abmeßmittel gemäß Anspruch 1 aufweist.

3. Bierabgabevorrichtung nach Anspruch 2,
dadurch gekennzeichnet,
daß die Abmeßmittel wirksam sind, um eine Vermischung von Starkbier und kohlensäurehaltigem Wasser in einem vorbestimmten Volumenverhältnis zu bewirken, um Bier einer vorbestimmten Stärke und geeignet zum Gebrauch zu liefern.

4. Bierabgabevorrichtung nach Anspruch 3,
dadurch gekennzeichnet,
daß das Starkbier und kohlensäurehaltige Wasser nur gemischt werden, während sie abgegeben werden.

5. Bierabgabevorrichtung nach einem der Ansprüche 2 bis 4,
dadurch gekennzeichnet,
daß ein abgemessenes Volumen aus Starkbier oder Wasser in ein Abmeßgefäb vorbestimmten Volumens eingeführt wird, wobei das Volumen größer als das Abmeßvolumen ist, und daß die andere Flüssigkeit dann in das Gefäß gefüllt wird, bis dieses voll ist.

## Revendications

1. Moyens de mesure servant à mesurer un volume prédéterminé d'un mélange de liquides, comprenant des premier et second appareils de mesure (37,38) comportant chacun un piston (35,36) déplaçable depuis une position finale dans une autre position finale à l'intérieur d'un cylindre associé (30), les cylindres des premier et second appareils de mesure étant constitués par des parties du cylindre associé (30), l'agencement étant tel que le volume total du liquide mesuré par les deux appareils de mesure lorsque chaque piston se déplace d'une position finale à l'autre, reste inchangé, caractérisés en ce qu'on peut ajuster axialement le cylindre associé (39) pour modifier le volume du liquide délivré et mesuré par chacun des appareils de mesure.

2. Distributeur de bière, caractérisé en ce qu'il comporte des moyens de mesure conformes à la revendication 1.

3. Distributeur de bière selon la revendication 2, caractérisé en ce que les moyens de mesure agissent de manière à mélanger de la bière forte et de l'eau gazeuse selon un rapport volumique prédéterminé de manière à fournir une bière possédant une force prédéterminée convenant pour sa consommation.

4. Distributeur de bière selon la revendication 3, caractérisé en ce que la bière forte et l'eau gazeuse sont mélangées uniquement lorsqu'elles sont délivrées.

5. Distributeur de bière selon l'une quelconque des revendications 2 à 4, caractérisé en ce que un volume mesuré de la bière forte ou de l'eau gazeuse est introduit dans un récipient de mesure possédant un volume prédéterminé supérieur audit volume mesuré et que l'autre liquide est ensuite introduit jusqu'à ce que le récipient soit plein.
